# EUROPEAN PATENT APPLICATION

(11) **EP 4 300 747 A1**
(43) Date of publication of application: **03.01.2024**
(21) Application number: 23178950.4
(22) Date of filing: 13.06.2023
(51) Int. Cl.: H02J 3/00, H02J 13/00, G06F 30/367

(54) **SYSTEM AND METHOD FOR SIMULATING ELECTRIC POWER GRID CONDITIONS**

(30) Priority: 23.06.2022 US 202217847721
(71) Applicant: General Electric Renovables España, S.L., 08005 Barcelona (ES)
(72) Inventor: Ramirez Sanchez, Fernando Arturo, Salem, VA, 24153 (US); Larsen, Einar Vaughn, Ballston Lake, NY, 12019 (US)
(74) Representative: Zimmermann & Partner Patentanwälte mbB

(57) **Abstract**

A method for simulating electric power grid conditions includes accessing, with a computing system, a reference voltage value associated with an electric power grid being simulated. Furthermore, the method includes modifying, with the computing system, the reference voltage value based on a virtual impedance associated with a condition on the electric power grid being simulated. Additionally, the method includes applying, with the computing system, a phase and magnitude compensation to the modified reference voltage value. Moreover, the method includes controlling, with the computing system, an operation of a grid simulator such that the grid simulator generates an output signal based on the modified voltage value after the phase and magnitude compensation has been applied, the output signal being applied to a power converter being tested to simulate the condition.

## Description

### FIELD

The present disclosure generally relates to systems and methods for simulating power grid conditions, such as in controlled environments and/or for lab applications. More particularly, the present disclosure relates systems and methods for simulating power grid conditions for testing power converters, such as power converters for wind turbines or solar panels.

### BACKGROUND

Wind power is considered one of the cleanest, most environmentally friendly energy sources presently available, and wind turbines have gained increased attention in this regard. A modern wind turbine typically includes a tower, a nacelle mounted on the tower, a generator positioned in the nacelle, and one or more rotor blades. The one or more rotor blades convert kinetic energy of wind into mechanical energy using known airfoil principles. A drivetrain transmits the mechanical energy from the rotor blades to the generator. The generator then converts the mechanical energy to electric power that may be supplied to a power grid.

Typically, a power converter is electrically coupled between the generator and the power grid. In this respect, the power converter regulates the flow of electric power between the generator and the grid. Specifically, the power converter allows the generator to output electric power at the power grid frequency as the rotational speed of the wind turbine rotor blades varies. As such, it is generally necessary to test new power converter designs to ensure that such new designs properly function during various conditions or faults that can occur on the power (e.g., line to ground faults during weak grid conditions). Thus, systems for simulating electric power grid conditions for use when testing power converters have been developed. While such systems work well, further improvements are needed.

### BRIEF DESCRIPTION

Aspects and advantages of the technology will be set forth in part in the following description, or may be obvious from the description, or may be learned through practice of the technology.

In one aspect, the present subject matter is directed to a method for simulating electric power grid conditions. The method includes accessing, with a computing system, a reference voltage value associated with an electric power grid being simulated. Furthermore, the method includes modifying, with the computing system, the reference voltage value based on a virtual impedance associated with a condition on the electric power grid being simulated. Additionally, the method includes applying, with the computing system, a phase and magnitude compensation to the modified reference voltage value. Moreover, the method includes controlling, with the computing system, an operation of a grid simulator such that the grid simulator generates an output signal based on the modified voltage value after the phase and magnitude compensation has been applied, the output signal being applied to a power converter being tested to simulate the condition.

In another aspect, the present subject matter is directed to a system for simulating electric power grid conditions. The system includes a grid simulator configured to be electrically coupled to a power converter being tested and a computing system communicatively coupled to the grid simulator. The computing system is configured to access a reference voltage value associated with an electric power grid being simulated. In addition, the computing system is configured to modify the reference voltage value based on a virtual impedance associated with a condition on the electric power grid being simulated. Furthermore, the computing system is configured to apply a phase and magnitude compensation to the modified reference voltage value. Additionally, the computing system is configured to control an operation of the grid simulator such that the grid simulator generates an output signal based on the modified voltage value after the phase and magnitude compensation has been applied, the output signal being applied to the power converter to simulate the condition.

In a further aspect, the present subject matter is directed to a system for simulating electric power grid conditions. The system includes a power converter and a grid simulator configured to be electrically coupled to a power converter being tested. Moreover, the system includes a grid simulator filter electrically coupled between the power converter and the grid simulator and an inductor electrically coupled between the grid simulator filter and the power converter. In addition, the system includes a computing system communicatively coupled to the grid simulator. The computing system is configured to access a reference voltage value associated with an electric power grid being simulated. Furthermore, the computing system is configured to modify the reference voltage value based on a virtual impedance associated with a condition on the electric power grid being simulated. Additionally, the computing system is configured to apply a phase and magnitude compensation to the modified reference voltage value. Moreover, the computing system is configured to control an operation of the grid simulator such that the grid simulator generates an output signal based on the modified voltage value after the phase and magnitude compensation has been applied, the output signal being applied to the power converter to simulate the condition.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 is a side view of one embodiment of a wind turbine;
FIG. 2 is a schematic view of one embodiment of a power generation system for a wind turbine, particularly illustrating a power converter of the power generation system;
FIG. 3 is a schematic view of one embodiment of a system for simulating electric power grid conditions;
FIG. 4 is a schematic view of one embodiment of control logic for simulating electric power grid conditions;
FIG. 5 is a schematic view of one embodiment of control logic for applying a voltage loop control compensation when simulating electric power grid conditions;
FIG. 6 is a schematic view of one embodiment of control logic for applying an automatic gain control compensation when simulating electric power grid conditions; and
FIG. 7 is a schematic view of one embodiment of a method for simulating electric power grid conditions.

Repeat use of reference characters in the present specification and drawings is intended to represent the same or analogous features or elements of the present technology.

### DETAILED DESCRIPTION

Reference will now be made in detail to present embodiments of the technology, one or more examples of which are illustrated in the accompanying drawings. The detailed description uses numerical and letter designations to refer to features in the drawings. Like or similar designations in the drawings and description have been used to refer to like or similar parts of the technology. As used herein, the terms "first," "second," and "third" may be used interchangeably to distinguish one component from another and are not intended to signify location or importance of the individual components.

Each example is provided by way of explanation of the technology, not limitation of the technology. In fact, it will be apparent to those skilled in the art that modifications and variations can be made in the present technology without departing from the scope or spirit thereof. For instance, features illustrated or described as part of one embodiment may be used on another embodiment to yield a still further embodiment. Thus, it is intended that the present technology covers such modifications and variations as come within the scope of the appended claims and their equivalents.

In general, the present subject matter is directed to systems and methods for simulating electric power grid conditions, such as in controlled environments and/or for lab applications. As will be described below, the disclosed system includes a grid simulator configured to be electrically coupled to a power converter being tested (e.g., for use with a wind turbine or a solar panel). In this respect, the grid simulator is a large power converter generates an output signal (e.g., a voltage signal) that is applied to the power converter. The output signal, in turn, is indicative of a grid condition or fault (e.g., a weak grid condition) that could be experienced by the power converter during operation. Unlike a traditional voltage divider system, a grid simulator enables testing of power converters or other similar equipment at different voltages and/or frequencies regardless of the real grid values.

In several embodiments, a computing system is configured to control the operation of the grid simulator such that the output signal of the grid simulator simulates a particular grid condition or fault and the response to the current drawn by the power converter being tested. More specifically, the computing system accesses a reference voltage value associated with an electric power grid, with the reference voltage value having an associated frequency and/or phase angle. Furthermore, the computing system modifies the reference voltage value based on a virtual impedance associated with the condition/fault simulated. In this respect, the virtual impedance is a mathematical model used to modify the reference voltage value based on the impedance, capacitance, and/or resistance occurring when an actual power grid experiencing the condition/fault being simulated. As such, the modified reference voltage value corresponds to the voltage of the power grid to which the power converter being tested would be exposed when the grid is experiencing the condition/fault being simulated. Thus, the virtual impedance allows the simulation of different grid strengths without the need for actual hardware changes. Additionally, the computing system applies a compensation to the modified reference voltage value. For example, the applied compensation may be a phase compensation, a voltage loop control compensation, and/or an automatic gain control compensation. Such applied compensation is intended to make up for the latencies associated with the communication, sampling, processing, PWM delays, and/or the like of the grid simulator and control stages. Thereafter, the computing system controls the operation of the grid simulator such that the grid simulator generates an output signal based on the compensated voltage value. Such control will drive a large power stage that acts as an amplifier to effectively create a grid that will react to the power delivery from the power converter being tested.

Applying the compensation to the modified reference voltage value simulating the power grid condition/fault improves the operation of the grid simulator. Specifically, grid simulators have latencies when generating the output signal that is applied to the power converter being tested. Such latencies may cause the grid simulator output signal to inaccurately simulate certain conditions/faults, such as high frequency conditions. However, as described above, the disclosed system and method applies a compensation to the modified reference voltage value simulating the power grid condition/fault. Using the compensated voltage value, a grid simulator can generate an output signal accurately simulating high frequency conditions/faults despite the latencies associated with the grid simulator.

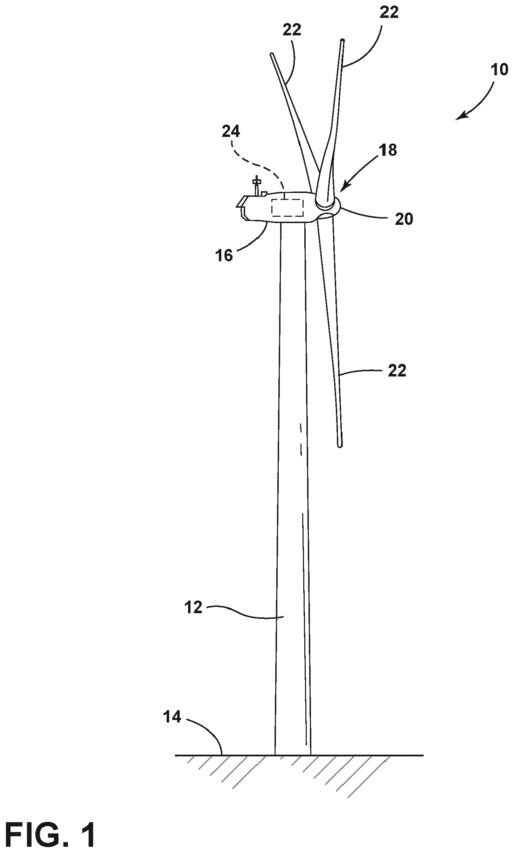

Referring now to the drawings, FIG. 1 is a perspective view of one embodiment of a wind turbine 10. As shown, the wind turbine 10 includes a tower 12 extending from a support surface 14, a machine head 16 mounted on the tower 12, and a rotor 18 rotatably coupled to the machine head 16. The rotor 18 includes a rotatable hub 20 and at least one rotor blade 22 coupled to and extending outwardly from the hub 20. For example, in the embodiment shown in FIG. 1, the rotor 18 includes three rotor blades 22. In alternative embodiments, however, the rotor 18 may include more or less than three rotor blades 22. Each rotor blade 22 may be spaced about the hub 20 to facilitate rotation of the rotor 18 to convert kinetic energy from the wind into usable rotational, mechanical energy. A generator 24 positioned in the machine head 16 may generate electrical power from the rotational energy of the rotor 18.

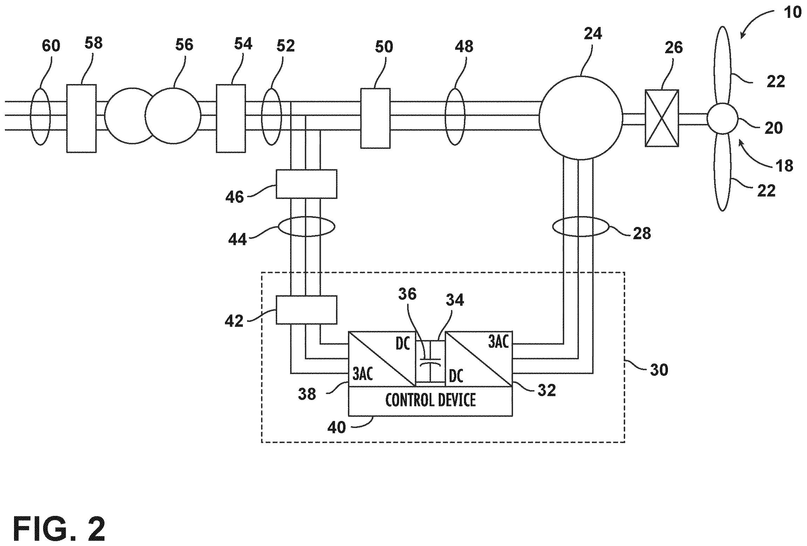

FIG. 2 is a schematic view of one embodiment of a power generation system 25 for the wind turbine 10. As shown, in several embodiments, the rotor 18 of the wind turbine 10 is coupled to a gearbox 26, which is, in turn, coupled to the generator 24. In the illustrated embodiment, the generator 24 is a doubly fed induction generator (DFIG). In this respect, the generator 24 may be connected to a stator bus 48 and a rotor bus 28. However, in alternative embodiments, the generator 24 may correspond to any other suitable type of generator.

Furthermore, the power generation system 25 includes a power converter 30 that is connected to the generator 24 via the rotor bus 28 and to the stator bus 48 via a line side bus 44. As such, the stator bus 48 may receive an output multiphase power (e.g., three-phase power) from a stator of the generator 24, and the rotor bus 28 may receive an output multiphase power (e.g., three-phase power) from a rotor of the generator 24. The power converter 30 may also include a rotor side converter (RSC) 32 and a line side converter (LSC) 38. The generator 24 is coupled to the RSC 32 via the rotor bus 28. Additionally, the RSC 32 is coupled to the LSC 38 via a DC link 34 formed by at least one DC link capacitor 36. The LSC 38 is, in turn, coupled to a line side bus 44. In addition, the power converter 162 may be communicatively coupled to a converter controller 40, which controls the operation of the RSC 32 and/or the LSC 38.

In operation, alternating current power generated by the generator 24 is supplied to an electrical grid 60 via the dual paths defined by the stator bus 48 and the rotor bus 28. With the rotor bus 28, sinusoidal multi-phase (e.g., three-phase) alternating current (AC) power is provided to the power converter 30. The RSC 32 converts the AC power provided from the rotor bus 28 into direct current (DC) power and provides the DC power to the DC link 34. In general, switching elements (e.g., IGBTs) in bridge circuits of the RSC 32 may be modulated to convert the AC power provided from the rotor bus 28 into DC power suitable for the DC link 34.

Additionally, the LSC 38 converts the DC power from the DC link 34 into AC power suitable for the electrical grid 60. Specifically, switching elements (e.g., IGBTs) in bridge circuits of the LSC 38 can be modulated to convert the DC power from the DC link 34 into AC power on the line side bus 44. The AC power from the power converter 30 can be combined with the power from the stator of generator 24 to provide multi-phase power (e.g., three-phase power) having a frequency maintained substantially at the frequency of the electrical grid 60 (e.g., 50 Hz or 60 Hz).

Moreover, various line contactors and circuit breakers including, for example, a grid breaker 58 may be included for isolating the various components as necessary for normal operation of the generator 24 during connection to and disconnection from the electrical grid 60. For example, a system circuit breaker 54 may couple a system bus 52 to a transformer 56, which may be coupled to the electrical grid 60 via the grid breaker 58. Furthermore, a stator sync switch 50, a converter breaker 46, and a line contactor 42 may be also included in the wind turbine power system 25 to connect or disconnect corresponding buses, for example, when current flow is excessive and may damage components of the wind turbine power system 25 or for other operational considerations. Additional protection components may also be included in the wind turbine power system 100.

The configuration of the wind turbine 10 described above and shown in FIGS. 1 and 2 is provided only to place the present subject matter in an exemplary field of use. Thus, the present subject matter may be readily adaptable to any manner of wind turbine configuration.

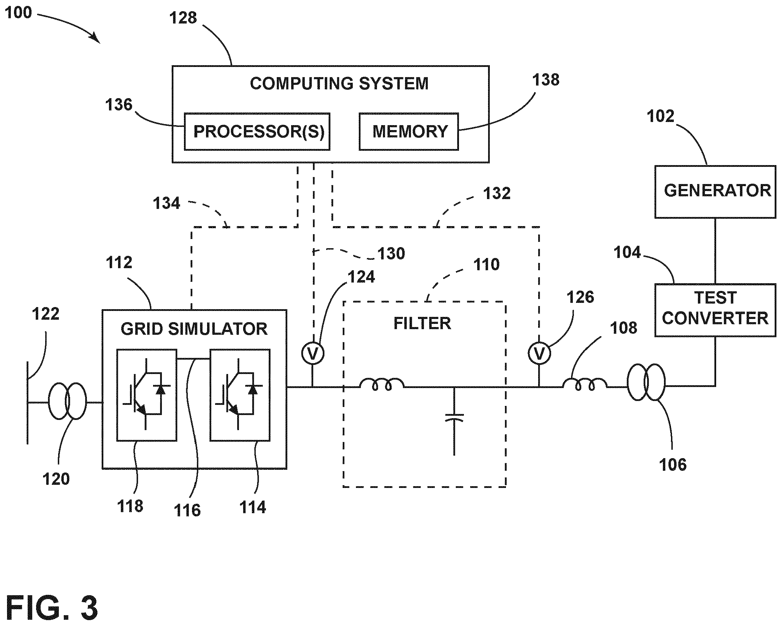

Referring now to FIG. 3, a schematic view of one embodiment of a system 100 for simulating grid conditions is illustrated in accordance with aspects of the present subject matter. In general, the system 100 will be described herein with reference to the wind turbine described above with reference to FIGS. 1-2. However, it should be appreciated by those of ordinary skill in the art that the disclosed system 100 may generally be utilized with wind turbines having any other suitable configuration.

As will be described below, the system 100 can be used when testing power converters. In this respect, the system 100 may include a power converter 104 to be tested. For example, in one instance, the power converter 104 to be tested may correspond to the power converter 30 of the wind turbine 10 (or another power converter of a similar design). However, in alternative embodiments, the power converter 104 to be tested may correspond to any suitable power converter, such as another power converter for a wind turbine, a power converter of a solar panel or panel array, and/or the like.

Furthermore, the system 100 includes a generator drivetrain 102 electrically coupled to the power converter 104 being tested. In general, the generator drivetrain 102 is configured to simulate the effect of an actual generator on the power converter 104. As such, in some embodiments, the generator drivetrain 102 may correspond to suitable software configured to control a voltage source (not shown) electrically coupled to the power converter 104. Alternatively, the generator drivetrain 102 may correspond to an actual generator that is electrically coupled to the power converter 104.

Additionally, the system 100 may include a grid simulator 112 that is electrically coupled to the power converter 104 being tested. In general, the grid simulator 112 is configured to generate an output signal that is applied to the power converter 104. The output signal, in turn, simulates the electric power grid and, more specifically, a condition/fault occurring on the grid. For example, the grid simulator 112 may simulate any suitable type of grid conditions/faults, such as bolted faults, open phase faults, high impedance faults, high frequency events, and/or the like. As shown, the grid simulator 112 may be electrically coupled to the power converter 104 via a transformer 106 and to a lab grid 122 via a transformer 120.

Moreover, the grid simulator 112 may have any suitable configuration that allows the grid simulator 112 to simulate grid conditions/faults. For example, in the illustrated embodiment, the grid simulator 112 includes as test side converter 114 and a grid side converter 118 coupled together via a transformer 116. The test side and grid side converters 114, 118 may include bridge circuits having one or more switching elements (e.g., IGBTs). However, in alternative embodiments, the grid simulator 112 may have any other suitable configuration.

In some embodiments, the system 100 may include a filter 110 coupled between the grid simulator 112 and the power converter 104 being tested. As such, the filter 110 may be configured to filter or otherwise condition the output signal being generated by the grid simulator 112. In this respect, as illustrated, the grid simulator filter 110 may include passive elements in various configurations. However, in alternative embodiments, response of the grid simulator filter 110 may be taken into consideration.

In addition, in some embodiments, the system 100 may include an inductor 108 electrically coupled (e.g., in series) between the grid simulator filter 110 and the power converter 104.

Furthermore, the system 100 includes voltage and current sensors 124, 126. In general, the voltage sensor 124 is configured to capture data indicative of the voltage acting on the power converter 104. Conversely, the current sensor 126 is configured to capture data indicative of the load being applied by the grid simulator 112. As such, the voltage and current sensors 124, 126 may correspond to any suitable sensing devices.

Moreover, the system 100 includes a computing system 128 communicatively coupled to one or more components of the system 100 to allow the operation of such components to be electronically or automatically controlled by the computing system 128. For instance, the computing system 128 may be communicatively coupled to the first and second voltage sensors 124, 126 via communicative links 130, 132. As such, the computing system 128 may be configured to receive data from the first and second voltage sensors 124, 126 that is indicative of the voltages of the power converter 104 and the grid simulator 112. Furthermore, the computing system 128 may be communicatively coupled to the grid simulator 112 via communicative link 134. In this respect, the computing system 128 may be configured to control the operation of the grid simulator 112 such that the grid simulator 112 generates an output signal that is indicative of a grip condition/fault being simulated. In addition, the computing system 128 may be communicatively coupled to any other suitable components of the system 100.

In general, the computing system 128 may comprise one or more processor-based devices, such as a given controller or computing device or any suitable combination of controllers or computing devices. Thus, in several embodiments, the computing system 128 may include one or more processor(s) 136 and associated memory device(s) 138 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 138 of the computing system 128 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 138 may generally be configured to store suitable computer-readable instructions that, when implemented by the processor(s) 136, configure the computing system 128 to perform various computer-implemented functions, such as one or more aspects of the methods and algorithms that will be described herein. In addition, the computing system 128 may also include various other suitable components, such as a communications circuit or module, one or more input/output channels, a data/control bus and/or the like.

The various functions of the computing system 128 may be performed by a single processor-based device or may be distributed across any number of processor-based devices, in which instance such devices may be considered to form part of the computing system 128. For instance, the functions of the computing system 128 may be distributed across multiple controllers or computing devices, such as a grid simulator controller, a laptop/desktop computer, a cloud-based computing device, and/or the like.

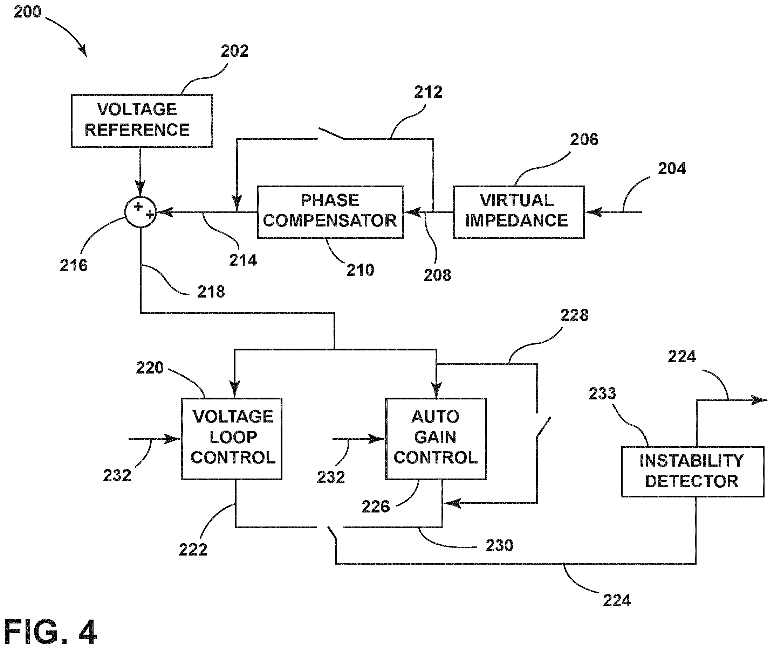

Referring now to FIG. 4, a flow diagram of one embodiment of example control logic 200 that may be executed by the computing system 128 (or any other suitable computing system) for simulating grid conditions is illustrated in accordance with aspects of the present subject matter. Specifically, the control logic 200 shown in FIG. 4 is representative of steps of one embodiment of an algorithm that can be executed to accurately simulate high frequency conditions/faults despite the latencies associated with the grid simulator. Thus, in several embodiments, the control logic 200 may be advantageously utilized in association with a system installed on or forming part of a grid simulator to allow for real-time simulation of grid conditions without requiring substantial computing resources and/or processing time. However, in other embodiments, the control logic 200 may be used in association with any other suitable system, application, and/or the like for simulating grid conditions.

As shown in FIG. 4, as indicated by box 202, the control logic 200 includes accessing a reference voltage value associated with an electric power grid being simulated. Specifically, in several embodiments, the computing system 128 may be configured to access a reference voltage value associated with an electric power grid being simulated. For example, in one embodiment, the computing system 128 may access the reference voltage value from its memory device(s) 138. The reference voltage value may, in turn, correspond to a voltage value to which the power converter 104 being tested would be exposed when the electric grid was operating properly (e.g., no faults are occurring). Moreover, the reference voltage value includes an associated frequency and/or phase angle.

Furthermore, as indicated by arrow 204, the control logic 200 includes receiving an instantaneous grid simulator current value. Specifically, as mentioned above, in several embodiments, the computing system 128 may be communicatively coupled to the second voltage sensor 126 via the communicative link 132. In this respect, computing system 128 may receive a signal or other data indicative of the voltage of the output signal being generated by the grid simulator 112.

Additionally, the control logic 200 includes modifying the grid simulator voltage value based on a virtual impedance associated with a condition on the electric power grid being simulated. Specifically, in several embodiments, the computing system 128 may be configured to execute a virtual impedance logic block 206 to modify the grid simulator voltage signal 204. In general, the virtual impedance logic block 206 may correspond to a mathematical model that represents the behavior of an actual electrical circuit. This virtual impedance modifies the grid simulator voltage signal 204 as the load current flows into the power converter being tested. That is, the virtual impedance logic block 206 models the impedance, capacitance, and/or resistance of an actual power grid experiencing the condition/fault being simulated on the grid simulator 112. The voltage drop of the virtual impedance is calculated from the current drawn from the grid simulator 112 into the load. Thus, the virtual impedance logic 206 may output a modified grid simulator voltage signal 208. For example, in one embodiment, the virtual impedance logic block 206 may correspond to a Thevenin equivalent. As will be described below, the virtual impedance logic block 206 is ultimately used to modify the reference voltage value 202 based on the impedance, capacitance, and/or resistance present within an actual power grid experiencing the condition/fault being simulated.

Moreover, in several embodiments, the control logic 200 includes applying a phase compensation to the modified grid simulator voltage signal 208. For example, the computing system 128 may be configured to execute a phase compensator logic block 210 to apply the phase compensation to the modified grid simulator voltage signal 208, thereby outputting a phase compensated grid simulator voltage signal 214. In one embodiment, the phase compensator logic block 210 corresponds to a digital or numerical transfer function that makes up for the system latencies (e.g., due to communication, processing, PWM delays, and/or the like) for a specified frequency range. In such embodiments, the computing system 128 may apply a lead lag compensation and a lag compensation to the modified grid simulator voltage signal 208. By applying the phase compensation, the control logic 200 allows the computing system 128 to respond faster to the grid simulator voltage signal 204 while maintaining a stable system with a response that resembles the desired grid. However, in some instances (e.g., when a voltage loop control compensation is applied), the modified grid simulator voltage signal 208 may bypass the phase compensator logic block 210 as indicated by arrow 212.

As shown in FIG. 4, the control logic 200 includes modifying the reference voltage value based on a virtual impedance associated with a condition on the electric power grid being simulated. For example, the computing system 128 may be configured to execute a summation block 216 to add the phase compensated grid simulator voltage signal 214 (or the modified grid simulator voltage signal 208 when the phase compensator logic block 210 is bypassed) to the reference voltage value. Thus, the summation block 216 outputs a modified reference voltage signal 218.

Furthermore, the control logic 200 includes applying a voltage loop control compensation to the modified reference voltage value. For example, in certain instances (e.g., when simulating unstable or extremely weak grids), the computing system 128 is configured to execute a voltage loop control compensation logic block 220 to apply a voltage loop control compensation to the modified reference voltage signal 220, thereby outputting a compensated voltage signal 222. Thus, the applied voltage loop control compensation sacrifices bandwidth to stabilize the modified reference voltage signal 218 when the high levels of virtual impedance are being used. As will be described below, such voltage loop control compensation logic 220 includes a proportional-resonant converter that keeps a zero-phase delay for a given frequency.

Alternatively, and as will be described below, an automatic gain control compensation 226 can be used in lieu of the voltage loop control compensation 220 when only amplitude compensation is desired. Thus, the automatic gain control compensation can be used to compensate for changes in the power stage voltage gain.

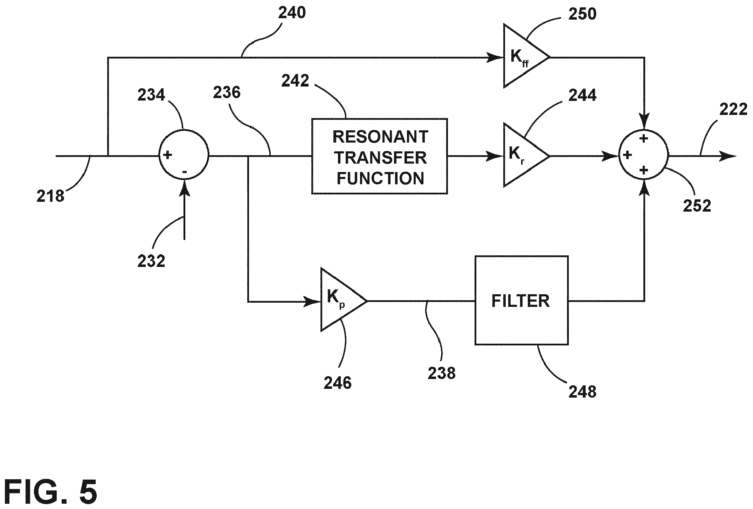

FIG. 5 illustrates a schematic view of one embodiment of the voltage loop control compensation logic block 220. More specifically, in some embodiments, the voltage loop control compensation logic block 220 includes a block 234 that provides an error signal between the reference and the actual voltage outputs. The error signal 236 then passes through a resonant branch 236, 242, 244 and a proportional branch 238, 246, 248. The resonant branch 236, 242, 244 keeps a zero delay on a specific frequency. Moreover, the proportional branch 238, 246, 248 decreases voltage correction for fast events across all of the frequency range. Additionally, the voltage loop control compensation logic block 220 includes a feedforward branch 240 through which a feedforward gain 250 is applied to the modified reference voltage signal 218. The resonant branch 236, the proportional branch 238, and the feedforward branch 240 are summed at summation block 252 to form the compensated voltage signal 222. However, in alternative embodiment, the voltage loop control compensation logic block 220 may have any other suitable structure.

Referring again to FIG. 4, the control logic 200 includes applying an automatic gain control compensation to the modified reference voltage value. The automatic gain control compensates for changes on the power stage gain during steady state. Thus, it allows for amplitude control when simulating strong grids or during long run tests. For example, in certain instances (e.g., when there is a sudden change in gain), the computing system 128 is configured to execute an automatic gain control compensation logic block 226 to apply the automatic gain control compensation to the modified reference voltage signal 220, thereby outputting a compensated voltage signal 230. Thus, the applied automatic gain control compensation can compensate for sudden gain changes, such as immediately before a grid condition/fault is being simulated.

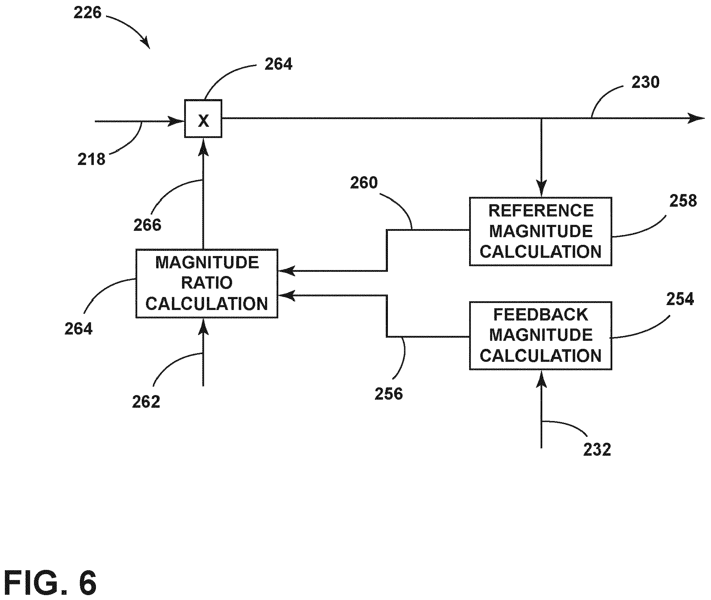

FIG. 6 illustrates a schematic view of one embodiment of the automatic gain control compensation logic block 226. More specifically, in some embodiments, the automatic gain control compensation logic block 226 includes a feedback magnitude determination logic block 254 that determines a magnitude 256 of the power converter voltage signal 232. Similarly, the automatic gain control compensation logic block 226 includes a reference magnitude determination logic block 258 that determines a magnitude 260 of the compensated voltage signal 230. Furthermore, the automatic gain control compensation logic block 226 includes a magnitude ratio calculation 264 that determines a magnitude ratio signal 266 based on the magnitude signals 256, 260 and a reference value 262. Thereafter, at block 268, the modified reference voltage signal 218 and the magnitude ratio signal 266are multiplied to form the compensated voltage signal 230.

Referring again to FIG. 4, the control logic 200 includes outputting one of the compensated voltage signals 222, 230 as a control signal 224. The control signal 224, in turn, is applied to the grid simulator 112 via the communicative link 134. As such, the control signal 224 instructs the grid simulator 112 to generate the output signal simulating a grid condition/fault for use in testing the power converter 104. For example, the compensated voltage signal 222 (i.e., the signal with the voltage loop control compensation) may be output as the control signal 224 when there is a large virtual impedance. Conversely, the compensated voltage signal 230 (i.e., the signal with the automatic gain control compensation) may be output as the control signal 224 when there are sudden changes in gain.

Additionally, the control logic 200 may include, in certain instances, halting the operation of the grid simulator 112 when an instability in the output signal exists. As such, in several embodiments, the computing system 128 may execute instability detector logic 233. When executing the logic 233, the computing system 128 may monitor for unstable conditions using the rate of change of the output signal (e.g., via the grid simulator voltage signal 204) and compare the monitored rate of change to a maximum rate of change threshold. When the monitored rate of change exceeds the maximum rate of change threshold, the computing system 128 may monitor the time period across which the monitored rate of change exceeds the maximum rate of change threshold. Thereafter, when the monitored time period exceeds a predetermined time period (thereby indicating that an instability exists), the computing system 128 may halt the operation of the grid simulator 112 to prevent damage to the grid simulator 112, the power converter 104, and/or other components of the system 100.

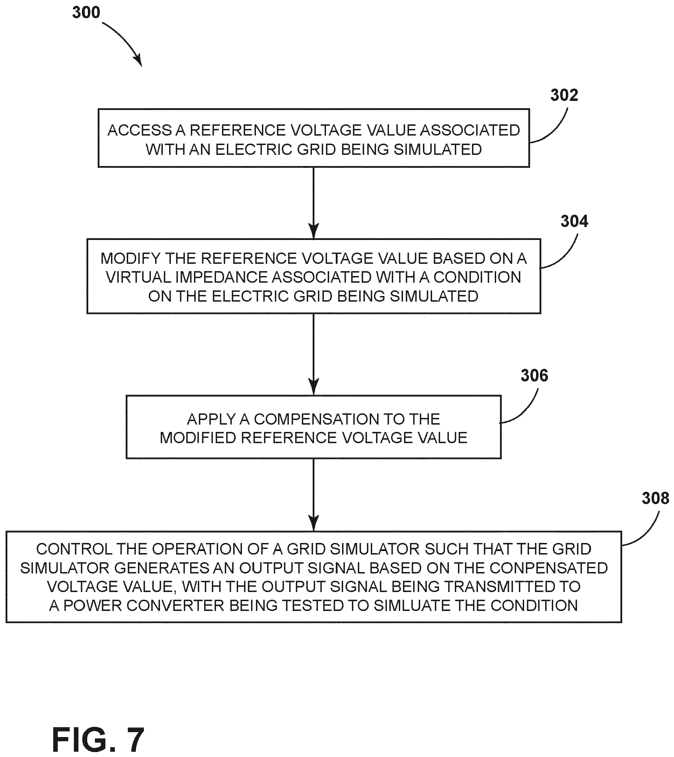

Referring now to FIG. 7, a flow diagram of one embodiment of a method 300 for simulating grid conditions is illustrated in accordance with aspects of the present subject matter. In general, the method 300 will be described herein with reference to the system 100 described above with reference to FIGS. 1-6. However, the disclosed method 300 may generally be implemented within any system having any suitable system configuration. In addition, although FIG. 7 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 7, at (302), the method 300 may include accessing, with a computing system, a reference voltage value associated with an electric power grid being simulated. For instance, as described above, the computing system 128 may be configured to access a reference voltage value associated with an electric power grid being simulated (e.g., that is stored within its memory device(s) 138).

Additionally, at (304), the method 300 may include modifying, with the computing system, the reference voltage value based on a virtual impedance associated with a condition on the electric power grid being simulated. For instance, as described above, the computing system 128 may be configured to modify the reference voltage value based on a virtual impedance associated with a condition on the electric power grid being simulated.

Moreover, as shown in FIG. 7, at (306), the method 300 may include applying, with the computing system, a compensation to the modified reference voltage value. For instance, as described above, the computing system 128 may be configured to apply a compensation to the modified reference voltage value.

Furthermore, at (308), the method 300 may include controlling, with the computing system, the operation of a grid simulator such that the grid simulator generates an output signal based on the compensated voltage value, with the output signal being applied to a power converter being tested to simulate the condition. For instance, as described above, the computing system 128 may be configured to control the operation of the grid simulator 112 such that the grid simulator 112 generates an output signal based on the compensated voltage value. The output signal is, in turn, applied to the power converter 104 being tested to simulate the grid condition/fault.

The present invention and various aspects, embodiments and details thereof will now be summarized in the following numbered clauses. The present invention relates to:
1. A method for simulating electric power grid conditions, the method comprising:
   accessing, with a computing system, a reference voltage value associated with an electric power grid being simulated;
   modifying, with the computing system, the reference voltage value based on a virtual impedance associated with a condition on the electric power grid being simulated;
   applying, with the computing system, a phase and magnitude compensation to the modified reference voltage value; and
   controlling, with the computing system, an operation of a grid simulator such that the grid simulator generates an output signal based on the modified voltage value after the phase and magnitude compensation has been applied, the output signal being applied to a power converter being tested to simulate the condition.
2. The method of clause 1, wherein controlling the operation of the grid simulator comprises:
   monitoring, with the computing system, for unstable conditions using a rate of change of the output signal;
   comparing, with the computing system, the monitored rate of change to a maximum rate of change threshold;
   monitoring, with the computing system, a time period across which the monitored rate of change exceeds the maximum rate of change threshold; and
   halting, with the computing system, the operation of the grid simulator when the monitored time period exceeds a predetermined time period.
3. The method of clause 1 or 2, wherein applying the phase and magnitude compensation comprises applying, with the computing system, a phase compensation.
4. The method of clause 3, wherein applying the phase compensation comprises:
   applying, with the computing system, a lead lag compensation; and
   applying, with the computing system, a lag compensation.
5. The method of any of the preceding clauses, wherein applying the phase and magnitude compensation comprises applying, with the computing system, a voltage loop control compensation.
6. The method of clause 5, wherein applying the voltage loop control compensation comprises:
   applying, with the computing system, a resonant branch;
   applying, with the computing system, a proportional branch; and
   applying, with the computing system, a feedforward branch.
7. The method of any of the preceding clauses, wherein applying the phase and magnitude compensation comprises applying, with the computing system, an automatic gain control compensation.
8. The method of clause 7, wherein applying the automatic gain control compensation comprises applying, with the computing system, one or more magnitude filters and one or more magnitude gain adjustments to the modified reference voltage value.
9. A system for simulating electric power grid conditions, the system comprising:
   a grid simulator configured to be electrically coupled to a power converter being tested; and
   a computing system communicatively coupled to the grid simulator, the computing system configured to:
      access a reference voltage value associated with an electric power grid being simulated;
      modify the reference voltage value based on a virtual impedance associated with a condition on the electric power grid being simulated;
      apply a phase and magnitude compensation to the modified reference voltage value; and
      control an operation of the grid simulator such that the grid simulator generates an output signal based on the modified voltage value after the phase and magnitude compensation has been applied, the output signal being applied to the power converter to simulate the condition.
10. The system of clause 9, wherein, when controlling the operation of the grid simulator, the computing system is configured to:
   monitor a rate of change of the output signal;
   compare the monitored rate of change to a maximum rate of change threshold;
   monitor a time period across which the monitored rate of change exceeds the maximum rate of change threshold; and
   halt the operation of the grid simulator when the monitored time period exceeds a predetermined time period.
11. The system of clause 9 or 10, wherein, when applying the phase and magnitude compensation, the computing system is configured to apply a phase compensation.
12. The system of clause 11, wherein, when applying the phase compensation, the computing system is configured to:
   apply a lead lag compensation; and
   apply a lag compensation.
13. The system of any of the preceding clauses 9 to 12, wherein, when applying the phase and magnitude compensation, the computing system is configured to apply a voltage loop control compensation.
14. The system of clause 13, wherein, when applying the voltage loop control compensation, the computing system is configured to:
   apply a resonant branch;
   apply a proportional branch; and
   apply a feedforward branch.
15. The system of any of the preceding clauses 9 to 14, wherein, when applying the phase and magnitude compensation, the computing system is configured to apply an automatic gain control compensation.
16. The system of clause 15, wherein, when applying the automatic gain control compensation, the computing system is configured to apply one or more magnitude filters and one or more magnitude gain adjustments to the modified reference voltage value.
17. The system of any of the preceding clauses 9 to 16, wherein:
   when modifying the reference voltage value, the computing system is further configured to modify the reference voltage value based on a voltage of the output signal and the virtual impedance; and
   when applying the phase and magnitude compensation, the computing system is configured to apply the phase and magnitude compensation based on a voltage of the power converter being tested.
18. The system of any of the preceding clauses 9 to 17, further comprising:
   a grid simulator filter electrically coupled between the grid simulator and the power converter being tested.
19. A system for simulating electric power grid conditions, the system comprising:
   a power converter;
   a grid simulator configured to be electrically coupled to a power converter being tested;
   a grid simulator filter electrically coupled between the power converter and the grid simulator;
   an inductor electrically coupled between the grid simulator filter and the power converter; and
   a computing system communicatively coupled to the grid simulator, the computing system configured to:
      access a reference voltage value associated with an electric power grid being simulated;
      modify the reference voltage value based on a virtual impedance associated with a condition on the electric power grid being simulated;
      apply a phase and magnitude compensation to the modified reference voltage value; and
      control an operation of the grid simulator such that the grid simulator generates an output signal based on the modified voltage value after the phase and magnitude compensation has been applied, the output signal being applied to the power converter to simulate the condition.
20. The system of clause 19, wherein the power converter comprises a wind turbine power converter.

This written description uses examples to disclose the technology, including the best mode, and also to enable any person skilled in the art to practice the technology, including making and using any devices or systems and performing any incorporated methods. The patentable scope of the technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A method for simulating electric power grid conditions, the method comprising:
accessing, with a computing system, a reference voltage value associated with an electric power grid being simulated;
modifying, with the computing system, the reference voltage value based on a virtual impedance associated with a condition on the electric power grid being simulated;
applying, with the computing system, a phase and magnitude compensation to the modified reference voltage value; and
controlling, with the computing system, an operation of a grid simulator such that the grid simulator generates an output signal based on the modified voltage value after the phase and magnitude compensation has been applied, the output signal being applied to a power converter being tested to simulate the condition.

2. The method of claim 1, wherein controlling the operation of the grid simulator comprises:
monitoring, with the computing system, for unstable conditions using a rate of change of the output signal;
comparing, with the computing system, the monitored rate of change to a maximum rate of change threshold;
monitoring, with the computing system, a time period across which the monitored rate of change exceeds the maximum rate of change threshold; and
halting, with the computing system, the operation of the grid simulator when the monitored time period exceeds a predetermined time period.

3. The method of any of the preceding claims, wherein applying the phase and magnitude compensation comprises applying, with the computing system, a phase compensation.

4. The method of any of the preceding claims, wherein applying the phase compensation comprises:
applying, with the computing system, a lead lag compensation; and
applying, with the computing system, a lag compensation.

5. The method of any of the preceding claims, wherein applying the phase and magnitude compensation comprises applying, with the computing system, a voltage loop control compensation.

6. The method of any of the preceding claims, wherein applying the voltage loop control compensation comprises:
applying, with the computing system, a resonant branch;
applying, with the computing system, a proportional branch; and
applying, with the computing system, a feedforward branch.

7. The method of any of the preceding claims, wherein applying the phase and magnitude compensation comprises applying, with the computing system, an automatic gain control compensation.

8. The method of any of the preceding claims, wherein applying the automatic gain control compensation comprises applying, with the computing system, one or more magnitude filters and one or more magnitude gain adjustments to the modified reference voltage value.

9. A system for simulating electric power grid conditions, the system comprising:
a grid simulator configured to be electrically coupled to a power converter being tested; and
a computing system communicatively coupled to the grid simulator, the computing system configured to:
access a reference voltage value associated with an electric power grid being simulated;
modify the reference voltage value based on a virtual impedance associated with a condition on the electric power grid being simulated;
apply a phase and magnitude compensation to the modified reference voltage value; and
control an operation of the grid simulator such that the grid simulator generates an output signal based on the modified voltage value after the phase and magnitude compensation has been applied, the output signal being applied to the power converter to simulate the condition.

10. The system of claim 9, wherein, when controlling the operation of the grid simulator, the computing system is configured to:
monitor a rate of change of the output signal;
compare the monitored rate of change to a maximum rate of change threshold;
monitor a time period across which the monitored rate of change exceeds the maximum rate of change threshold; and
halt the operation of the grid simulator when the monitored time period exceeds a predetermined time period.

11. The system of any of claims 9-10, wherein, when applying the phase and magnitude compensation, the computing system is configured to apply a phase compensation.

12. The system of any of claims 9-11, wherein, when applying the phase compensation, the computing system is configured to:
apply a lead lag compensation; and
apply a lag compensation.

13. The system of any of claims 9-12, wherein, when applying the phase and magnitude compensation, the computing system is configured to apply a voltage loop control compensation.

14. The system of any of claims 9-13, wherein, when applying the voltage loop control compensation, the computing system is configured to:
apply a resonant branch;
apply a proportional branch; and
apply a feedforward branch.

15. The system of any of claims 9-14, wherein, when applying the phase and magnitude compensation, the computing system is configured to apply an automatic gain control compensation.
